# EUROPEAN PATENT SPECIFICATION

(11) **EP 1 036 041 B1**
(45) Date of publication and mention of the grant of the patent: **26.03.2003**
(21) Application number: 98965735.8
(22) Date of filing: 02.12.1998
(51) Int. Cl.: C03B 3/02, C03B 5/00, C03C 1/00, C03C 13/00, C03C 13/06

(54) **PROCESSES FOR THE PRODUCTION OF MAN-MADE VITREOUS FIBRES**
VERFAHREN ZUR HERSTELLUNG VON GLASARTIGEN KUNSTFASERN
PROCEDE DE PRODUCTION DE FIBRES VITREUSES

(30) Priority: 02.12.1997 EP 97309667; 02.12.1997 EP 97309676; 02.12.1997 EP 97309674
(43) Date of publication of application: 20.09.2000
(73) Proprietor: Rockwool International A/S, 2640 Hedehusene (DK)
(72) Inventor: CHRISTENSEN, Vermund, Rust, DK-4000 Roskilde (DK); JENSEN, Soren, Lund, DK-2840 Holte (DK)
(74) Representative: Samuels, Lucy Alice
(86) International application number: EP9807824
(87) International publication number: WO99028248

(56) References cited:
- WO-A-87/07591
- WO-A-89/04813
- WO-A-90/07470
- WO-A-92/04289
- US-A- 4 818 290
- US-A- 4 877 449

## Description

This invention relates to the production of man-made vitreous fibres (MMVF) having high content of alumina.

MMVF may be made by forming a mineral melt by melting a mineral charge in a furnace and fiberising the melt, usually by a centrifugal fiberising process.

There is a particular interest in the manufacture of MMVF insulation containing more than 14%, and often 18 to 30%, alumina, for instance as described in WO-A-96/14274 and WO-A-96/14454.

In many of the furnaces which are used, there is a large pool of melt and the mineral charge is melted into this pool. Examples are tank and electric furnaces. Melting of material is conducted into a large volume of previously melted material and the residence time of charge material in the melt pool tends to be relatively long, typically several hours.

However, there is another type of furnace which is used for forming the melt for MMVF production, especially for fibres of the types that are referred to as rock (including stone or slag) fibres. This is a shaft furnace in which the furnace contains a self-supporting column of solid coarse mineral material and combustion gases permeate through this column so as to heat it and cause melting. The melt drains to the bottom of the column, where a pool of melt is usually formed. The melt is removed from the base of the furnace. In this case the pool of melt is relatively small and the residence time of material in that pool is relatively short, typically minutes.

Certain materials have been suggested as suitable for provision of the above-discussed high alumina fibres. These include minerals which have high aluminium content such as bauxite. However, bauxite and other high aluminium materials, particularly those having high content of alumina Al₂O₃, have high melting point and tend to melt only slowly into the pool of melt. Bauxite in particular tends to dissolve into the melt rather than melt completely. It may dissolve or melt incompletely and leave a residue at the base of the furnace, which must be removed from time to time. Thus to improve the melting fuel, usually solid fossil fuel, is generally included with the charge to provide energy for the melting process. Greater amounts of fuel lead to greater costs.

Thus the invention is concerned with the problem of providing a process for the production of high aluminium content fibres which alleviates melting problems in an economic manner. These problems are particularly noticeable in shaft furnaces.

US-A-4,818,290 relates to a method for utilising slag from ferroalloy production. Aluminium oxide and silicon oxide are added to the molten slag which is used to manufacture heat-resistant, fire-resistant and/or alkali-resistant fibre materials. The use of ferrochromium slag in a shaft furnace is not disclosed.

The related application WO-A-89/04813 discloses a method for producing fibres resistant to high temperatures and highly alkaline conditions from ferrochromium slag. The use of a shaft furnace is not disclosed. The use of an electric furnace is preferred.

According to the invention we provide a process of producing man-made vitreous fibres (MMVF) having a content of at least 14% aluminium, measured as wt.% Al₂O₃, by providing a charge of raw mineral material in a furnace, melting the charge in the furnace to form a melt and fiberising the melt to form fibres, characterised in that the charge comprises at least 5%, by weight based on total charge, ferro-chromium slag.

We find that the inclusion of this one particular type of starting material, out of the entire range of waste and virgin materials which exist, and in contrast to many of the materials known for the production of high aluminium MMVF, such as bauxite, allows the provision of a high level of aluminium but alleviates melting problems. It is believed that this is related to the fact that aluminium in the form of, say, bauxite is very difficult to melt and requires major energy input, whereas ferro-chromium slag materials are produced by a process which results in the aluminium being present in a form which requires less energy input for melting. Additionally, the resultant content of chromium in the fibres can even have beneficial effects.

The invention is further beneficial in that it alleviates the melting problem by using a source of aluminium which is economical, conveniently available and for which previously there were no or very limited uses.

Ferro-chromium slag is obtained from the metallurgical industry, in particular the ferro-alloy industry. It is produced as a by-product from the formation of ferrochromium alloy. Suitable materials have content of aluminium from 15 to 40%, preferably 20 to 35%, more preferably at least 22% and in particular 24 to 32%. They have content of iron from 1 to 10%, preferably 2 to 7%. Content of chromium is preferably from 4 to 15%, more preferably 5 to 13%. All proportions are measured by weight based on the oxide.

The fibres produced according to the invention have high content of aluminium, namely at least 14% measured as Al₂O₃ based on weight of oxides. Suitable high aluminium, biologically soluble, fibres which can advantageously be made in the present invention are described in WO-A-96/14454 and WO-A-96/14274. Others are described in WO-A-97/29057, DE-U-2,970,027 and WO-A-97/30002. Reference should be made to each of these. In general the fibres and the melt from which they are formed have an analysis (measured as % by weight of oxides) within the various ranges defined by the following normal and preferred lower and upper limits:
SiO₂ at least 30, 32, 35 or 37; not more than 51, 48, 45 or 43
Al₂O₃ at least 14, 15, 16 or 18; not more than 35, 30, 26 or 23
CaO at least 2, 8 or 10; not more than 30, 25 or 20
MgO zero or at least 2 or 5; not more than 25, 20 or 15
FeO (including Fe₂O₃) zero or at least 2, 5; not more than 15, 12 or 10
FeO + MgO at least 10, 12, 15; not more than 30, 25, 20
Na₂O + K₂O zero or at least 1; not more than 19, 14, 10
CaO + Na₂O + K₂O at least 10, 15; not more than 30, 25
TiO₂ zero or at least 1; not more than 6, 4, 2
TiO₂ + FeO at least 4, 6; not more than 18, 12
B₂O₃ zero or at least 1; not more than 5, 3
P₂O₅ zero or at least 1; not more than 8, 5
Others zero or at least 1; not more than 8, 5

The fibres preferably have a sintering temperature above 800°C, preferably above 1000°C.

The melt preferably has a viscosity at fibre forming temperature of 5 to 100 poise, preferably 10 to 70 poise at 1400°C.

The fibres preferably have an adequate solubility in lung fluids as shown by in vivo tests or in vitro tests, typically conducted in physiological saline buffered to about pH 4.5. Suitable solubilities are described in WO-A-96/14454. Usually the rate of dissolution is at least 10 or 20nm per day in that saline.

The preferred fibres which are made in the invention have an analysis which contains at least 15%, usually at least 17% and most usually at least 18% Al₂O₃, e.g., up to 30, 35 or 40%.

Particularly preferred fibres produced according to the invention are biologically soluble fibres containing 30 to 51% SiO₂, 18 to 30% Al₂O₃, 2 to 30% CaO, 0 to 25% MgO, 0 to 15% FeO, 0 to 6% TiO₂, 0 to 6% P₂O₅, 0 to 5% B₂O₃, 0 to 10% alkali metal oxide and 0 to 8% other elements. Particularly preferred fibres are those described in, for instance, WO-A-96/14454 and WO-A-96/14274. The fibres preferably have physiological solubility as described therein.

The use of ferro-chromium slag as a starting material tends to result in a measurable content of chromium in the final fibres. The amount of chromium is usually from 0 to 2%. Preferred amounts of chromium are from 0.6 to 1%. We find that the inclusion of chromium is not harmful to insulation or solubility and can in fact have positive advantages. For instance, it may give a fungicidal effect. This can be useful in any permanently installed material such as MMVF products. Thus the final fibres may have fungicidal properties.

Content of chromium and solubility can be assessed by measuring dissolution rate in the same way as described above except in an aqueous medium which is aqueous oxalic acid at pH 2.5. Under such conditions the fibres produced in the invention preferably give a solution containing from 10 to 20 ppm chromium.

The fibres produced in the invention have high aluminium content. Preferably at least 15%, more preferably at least 20% and in some cases at least 25% (based on total aluminium content measured as above), of the aluminium content is provided by ferro-chromium slag.

The fibres may be made in standard manner, by forming a mineral melt by melting mineral solids which include the ferro-chromium slag material and then forming fibres from the melt, often by a centrifugal fibre formation process.

For instance the fibres may be formed by a spinning cup process in which they are thrown outwardly through perforations in a spinning cup, or melt may be thrown off a rotating disc and fibre formation may be promoted by blasting jets of gas through the melt. Preferably fibre formation is conducted by pouring the melt onto the first rotor in a cascade spinner. Preferably the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The melt is formed in a conventional manner, in shaft furnaces in which the residence time of the raw materials in the melt is short, and in which the furnace contains a column of solid mineral material. The melt drains to the bottom of the column, usually into a pool of melt, and is removed from the base of the furnace. Preferred shaft furnaces are cupola furnaces.

The ferro-chromium slag may be incorporated in the charge in any convenient form. It may be added as coarse lumps which are added directly to the furnace. It may be added, after conversion to a suitably small particle size, in the form of bonded briquettes which are then added to the furnace.

At least 5%, preferably at least 10 or 15%, and in particular at least 20%, of the total charge is ferro-chromium slag. Normally the amount is not more than 50%, in particular not more than 30% (all percentages by weight based on the mineral charge which forms the melt). Briquettes, if they are used and contain ferro-chromium slag, preferably contain at least 5%, more preferably at least 10, 15 or 20%, ferro-chromium slag, but not usually more than 30 or 50%.

The remainder of the charge may be conventional, for instance virgin rock or recycled MMVF products. Waste material may also be used.

Wastes that can conveniently be incorporated as well as the ferro-chromium slag include other slags from the metallurgical industry, especially steelmaking slags such as converter slags, ladle slags or EAF slags, and other slags from the ferro-alloy industry such as ferro-manganese and ferro-silicon slags; slags and residues from the primary production of aluminium, such as spent aluminium pot lining or red mud; sewage sludge; bleaching clay; residues from the incineration of household and industrial wastes, especially slags or filter ashes from the incineration of municipal solid wastes; glass waste (or slags) from the vitrification of other waste products; glass cullets; waste products from the mining industry, especially minestone from the excavation of coal; residues from the incineration of fossil fuel, especially from the combustion of coal at power plants; spent abrasive sand; spent moulding sand from iron and steel casting; waste sieving sand; and breakage waste from the ceramic and brick industry. Toxic virgin rock may also be used as waste. Other preferred wastes include slags and residues from the secondary production of aluminium. These are often generically described as "aluminium dross" or "aluminium oxide dross". Preferred wastes contain 0.5 to 10 wt.% metallic aluminium and 50 to 90 wt.% alumina. They are discussed, for use in briquettes, in our copending application WO-A-99/28252 In particular we prefer to use wastes from the aluminium casting process. This process provides a particular alumina-rich waste material described as "alu-dross". This tends to contain significant proportions of metallic aluminium and is thus treated in order to retrieve the metallic aluminium. The alu-dross is generally crushed, milled and sieved. This produces some aluminium for re-sale and an aluminium-rich fraction which is sent to a furnace for re-use. As a by-product an alumina-rich powder is also produced. This is described herein as "crushed alu-dross". The aluminium-rich fraction, optionally together with other aluminium-containing waste materials, is subjected to remelting in a furnace. This may be a rotating furnace or kiln. The aluminium waste may be subjected to plasma heating. A conventional furnace may also be used. Salt is usually added to the furnace in order to reduce the surface tension of the aluminium and reduce oxidation. This process produces an aluminium fraction for re-sale, more alu-dross and a salt slag material. The salt slag can be subjected to a wet chemical process (involving water washing and high temperature treatment) which produces a salt fraction, which is recycled to the furnace, and a further alumina-rich powder, described herein as "treated aluminium salt slag". This latter product is a preferred waste product.

The following Examples each show a composition which can be melted in a cupola furnace and the analysis of the composition and the fibres obtained from it.

### Example 1

100% briquettes consisting of :
9% cement
12% wool waste
22% ferro-chromium slag
23% shredder ash
29% diabase split
5% bauxite
resulting chemical composition (in wt. %) :

| | | | | | | | | | |
|---|---|---|---|---|---|---|---|---|---|
| SiO₂ | Al₂O₃ | TiO₂ | FeO | CaO | MgO | Na₂O | K₂O | Cr₂O₃ | CuO |
| 41.8 | 20.5 | 1.2 | 6.1 | 14.8 | 11.8 | 1.5 | 1.0 | 1.4 | 0.12 |

### Example 2

100% briquettes consisting of :
9% cement
5% converter slag
14% ferro-chromium slag
62% diabase split
10% aluminium dross (treated aluminium salt slag)
resulting chemical composition (in wt. %) :

| | | | | | | | | | |
|---|---|---|---|---|---|---|---|---|---|
| SiO₂ | Al₂O₃ | TiO₂ | FeO | CaO | MgO | Na₂O | K₂O | Cr₂O₃ | ZnO |
| 40.3 | 21.0 | 1.7 | 7.1 | 13.6 | 12.3 | 1.9 | 0.9 | 0.8 | 0.2 |

### Example 3

45% diabase
55% briquettes consisting of :
9% cement
41% wool waste
23% ferro-chromium slag
14% EAF fly-ash
13% bottom ash from power plants
resulting chemical composition (in wt. %) :

| | | | | | | | | | |
|---|---|---|---|---|---|---|---|---|---|
| SiO₂ | Al₂O₃ | TiO₂ | FeO | CaO | MgO | Na₂O | K₂O | Cr₂O₃ | F₂ |
| 42.4 | 18.1 | 1.5 | 7.3 | 15.2 | 11.0 | 1.6 | 1.1 | 0.8 | 1.4 |

### Example 4

Charge: 53% diabase + 22% ferro-chromium slag + 25% cement briquette
Briquette composition: 14% Cement + 48% recycling material + 20% converter slag + 6% bottom ash from coal-fired power plant + 12% calcined bauxite
Resulting chemical composition (in wt.%):

| | |
|---|---|
| SiO₂ | 41.4 |
| Al₂O₃ | 19.8 |
| TiO₂ | 1.7 |
| FeO | 7.4 |
| CaO | 11.8 |
| MgO | 13.7 |
| Na₂O | 1.7 |
| K₂O | 0.8 |

Viscosity (1400°C) =18.6 Poise
Iron reduction is 30%
Concentration of Cr: 1.6 wt.%
It is estimated that 10% of Cr from the charge is lost in tap iron and filter dust.

### Example 5

In this Example the ferro-chromium slag is incorporated in the main furnace and a separate waste furnace is provided in which other materials are melted, as described in our corresponding application WO-A-99/28247.

Charge into cupola furnace:
3850 kg/h diabase
1050 kg/h slag from production of ferro-chromium alloy

With a loss on ignition of 4% this provides 0,96 (3850 + 1050) = 4700 kg of melt per hour from the cupola furnace.

In an electric waste melting furnace we charge:
900 kg/h mineral wool waste
50 kg/h aluminium dross from the secondary melting of aluminium (treated aluminium salt slag)
450 kg/h converter slag from production of steel
900 kg/h filter ash from the incineration of municipal solid waste

The charge blend is melted continuously and mixed with the melt coming from the cupola furnace. The melt blend is poured onto a cascade spinner to form mineral fibres of the following chemical composition:

| | |
|---|---|
| SiO₂ | 41.1 % |
| Al₂O₃ | 20.0 % |
| TiO₂ | 1.7 % |
| FeO | 7.3 % |
| CaO | 12.9 % |
| MgO | 12.6 % |
| NaC₂ | 2.1 % |
| K₂O | 1.2 % |
| F+C₁ | 0.5 % |
| Others: | 0.6 % |

Both aluminium dross and the fly ash from the waste incineration contain considerable amounts of toxic components fluorine, chlorine, zinc and lead. The combined input is:

| | Charged Amount (Kg/h) | F (kg/h) | Cl (kg/h) | Pb (kg/h) | Zn (kg/h |
|---|---|---|---|---|---|
| Diabase | 3850 | - | - | - | - |
| Ferro-chromium slag | 1050 | - | - | - | - |
| Production waste | 630 | 2 | - | - | - |
| Aluminium dross | 525 | 12 | 2 | 2 | 2 |
| Converter slag | 315 | 4 | - | - | - |
| MSW fly ash | 630 | 1 | 50 | 5 | 16 |
| TOTAL | 7000 | 19 | 52 | 7 | 18 |

By confirming this input to the separate waste melting furnace the effluence of fluorine, chlorine, zinc, lead and other volatile components to the flue gas and the filters is minimised.

## Claims

1. A process of producing man-made vitreous fibres having a content of at least 14% aluminium, measured as weight % Al₂O₃, comprising
providing a charge of raw mineral material in a shaft furnace, said charge being a stack of solid mineral material,
melting the charge in the furnace to form a melt and fiberising the melt to form fibres,
wherein the charge comprises ferro-chromium slag and the content of ferro-chromium slag in the charge is at least 5%, by weight based on total charge.

2. A process according to claim 1 in which the content of ferro-chromium slag in the charge is at least 10%, by weight based on total charge.

3. A process according to claim 1 in which the furnace is a cupola furnace.

4. A process according to any preceding claim in which the ferro-chromium slag has a content of aluminium of from 22 to 35%, content of iron from 1 to 10% and content of chromium of from 4 to 15%, all calculated by weight based on oxides.

5. A process according to any preceding claim in which the fibres have a content of chromium of from 0.6 to 2 wt.%, measured as Cr₂O₃ based on oxides.

6. A process according to any preceding claim in which the fibres have a content of calcium of at least 8 wt.%, measured as CaO based on oxides.

7. A process according to any preceding claim in which the fibres have a content of magnesium of not more than 15 wt.%, measured as MgO based on oxides.

8. A process according to any preceding claim in which the fibres have a content of iron of at least 2 wt.%, measured as FeO based on oxides.

9. A process according to any preceding claim in which the fibres have a content of sodium and potassium of at least 1 wt.%, measured as Na₂O+K₂O based on oxides.

10. A process according to any preceding claim in which the ferro-chromium slag is added to the furnace in solid form.

11. A process according to any preceding claim in which the ferro-chromium slag is incorporated in bonded briquettes which are added to the furnace.

12. A process according to any of claims 1 to 10 in which the ferro-chromium slag is incorporated in the charge as coarse lumps which are added directly to the furnace.

13. A process according to any preceding claim in which the fibres are formed into an insulation product.

## Patentansprüche

1. Verfahren zur Herstellung von künstlichen glasartigen Fasern mit einem Gehalt von mindestens 14% Aluminium, gemessen als Gewichtsprozent Al₂O₃, umfassend
das Bereitstellen einer Charge von mineralischem Rohmaterial in einem Schachtofen, wobei die Charge eine Schichtung von festem mineralischem Material ist,
das Schmelzen der Charge in dem Ofen unter Bildung einer Schmelze und Zerfasern der Schmelze unter Bildung von Fasern,
wobei die Charge Ferrochrom-Schlacke umfasst und der Gehalt der Ferrochrom-Schlacke in der Charge mindestens 5 Gew.-%, bezogen auf die Gesamtcharge, beträgt.

2. Verfahren nach Anspruch 1, in welchem der Gehalt an Ferrochrom-Schlacke in der Charge mindestens 10 Gew.-%, bezogen auf die Gesamtcharge, beträgt.

3. Verfahren nach Anspruch 1, in welchem der Ofen ein Kupolofen ist.

4. Verfahren nach irgendeinem vorhergehenden Anspruch, in welchem die Ferrochrom-Schlacke einen Aluminiumgehalt von 22 bis 35%, einen Eisengehalt von 1 bis 10% und einen Chromgehalt von 4 bis 15% aufweist, alles nach dem Gewicht auf Basis von Oxiden berechnet.

5. Verfahren nach irgendeinem vorhergehenden Anspruch, in welchem die Fasern einen Chromgehalt von 0,6 bis 2 Gew.-%, gemessen als Cr₂O₃ auf Basis der Oxide, aufweisen.

6. Verfahren nach irgendeinem vorhergehenden Anspruch, in welchem die Fasern einen Calciumgehalt von mindestens 8 Gew.-%, gemessen als CaO auf Basis der Oxide, aufweisen.

7. Verfahren nach irgendeinem vorhergehenden Anspruch, in welchem die Fasern einen Magnesiumgehalt von nicht mehr als 15 Gew.-%, gemessen als MgO auf Basis der Oxide, aufweisen.

8. Verfahren nach irgendeinem vorhergehenden Anspruch, in welchem die Fasern einen Eisengehalt von mindestens 2 Gew.-%, gemessen als FeO auf Basis der Oxide, aufweisen.

9. Verfahren nach irgendeinem vorhergehenden Anspruch, in welchem die Fasern einen Gehalt von Natrium und Kalium von mindestens 1 Gew.-%, gemessen als Na₂O + K₂O auf Basis der Oxide, aufweisen.

10. Verfahren nach irgendeinem vorhergehenden Anspruch, in welchem die Ferrochrom-Schlacke in fester Form zum Ofen gegeben wird.

11. Verfahren nach irgendeinem vorhergehenden Anspruch, in welchem die Ferrochrom-Schlacke in gebundenen Briketts enthalten ist, die dem Ofen zugegeben werden.

12. Verfahren nach irgendeinem der Ansprüche 1 bis 10, in welchem die Ferrochrom-Schlacke als große Klumpen in der Charge enthalten ist, die direkt in den Ofen gegeben werden.

13. Verfahren nach irgendeinem vorhergehenden Anspruch, in welchem die Fasern zu einem Isolationsprodukt verarbeitet werden.

## Revendications

1. Procédé de fabrication de fibres vitreuses artificielles possédant un contenu d'au moins 14 % d'aluminium, mesurés en tant que % en poids de Al₂O₃, consistant à
disposer une charge d'un matériau minéral brut dans un four tubulaire, ladite charge étant une pile du matériau minéral solide,
faire fondre la charge dans le four pour former une masse fondue, et
rendre fibreuse la masse fondue pour former des fibres,
la charge comprenant un laitier de ferro-chrome et le contenu du laitier de ferro-chrome dans la charge étant égale à au moins 5 % en poids rapportés à la charge totale.

2. Procédé selon la revendication 1, selon lequel le contenu du laitier de ferro-chrome dont la charge est égale à au moins 10 % en poids rapportés à la charge totale.

3. Procédé selon la revendication 1, selon lequel le four est un four cubilot.

4. Procédé selon l'une quelconque des revendications précédentes, selon lequel le laitier de ferro-chrome possède une teneur en aluminium comprise entre 22 et 35 %, une teneur en fer comprise entre 1 et 10 % et une teneur en chrome comprise entre 4 et 15 %, ces teneurs étant toutes calculées sur une base en poids rapportée à des oxydes.

5. Procédé selon l'une quelconque des revendications précédentes, selon lequel les fibres possèdent une teneur en chrome comprise entre 0,6 et 2 % en poids, mesurée en tant que Cr₂O₃ sur la base d'oxydes.

6. Procédé selon l'une quelconque des revendications précédentes, selon lequel les fibres possèdent une teneur en calcium égale à au moins 8 % en poids, mesurée en tant que CrO sur la base d'oxydes.

7. Procédé selon l'une quelconque des revendications précédentes, selon lequel les fibres possèdent une teneur en magnésium non supérieure à 15 % en poids, mesurée en tant que MgO sur la base d'oxydes.

8. Procédé selon l'une quelconque des revendications précédentes, selon lequel les fibres possèdent une teneur en fer égale à au moins 2 % en poids, mesurée en tant que FeO sur la base d'oxydes.

9. Procédé selon l'une quelconque des revendications précédentes, selon lequel les fibres possèdent une teneur en sodium et en potassium égale à au moins 1 % en poids, mesurée en tant que Na₂O+K₂O sur la base d'oxydes.

10. Procédé selon l'une quelconque des revendications précédentes, selon lequel le laitier de ferro-chrome est ajouté dans le four sous forme solide.

11. Procédé selon l'une quelconque des revendications précédentes, selon lequel le laitier de ferro-chrome est incorporé dans des briquettes liées, qui sont ajoutées dans le four.

12. Procédé selon l'une quelconque des revendications 1 à 10, selon lequel le laitier de ferro-chrome est incorporé dans la charge sous la forme de morceaux grossiers, qui sont ajoutés directement dans le four.

13. Procédé selon l'une quelconque des revendications précédentes, selon lequel les fibres sont formées de manière à réaliser un produit isolant.
